# EUROPEAN PATENT SPECIFICATION

(11) **EP 4 317 675 B1**
(45) Date of publication and mention of the grant of the patent: **25.06.2025**
(21) Application number: 22306182.1
(22) Date of filing: 04.08.2022
(51) Int. Cl.: F03B 11/00, F03B 3/06, F03B 3/14

(54) **AIR-FILLED KAPLAN TURBINE RUNNER**
LUFTGEFÜLLTES KAPLANTURBINENLAUFRAD
ROUE DE TURBINE KAPLAN REMPLIE D'AIR

(43) Date of publication of application: 07.02.2024
(73) Proprietor: GE Renewable Technologies, 38100 Grenoble (FR)
(72) Inventor: LOWYS, Pierre-Yves, QUEBEC, J4Z 0N5 (CA); LABRECQUE, Guy, QUEBEC, J4Z 0N5 (CA); FOREST, Pierre-Luc, QUEBEC, J4Z 0N5 (CA)
(74) Representative: Brevalex

(56) References cited:
- CA-A1- 2 889 026
- FR-A- 1 017 514
- FR-A- 1 164 867
- GB-A- 986 797
- ROLAND FALKENHEM ET AL: "Technologies for Eliminating Oil in Kaplan Turbines", 24 December 2010 (2010-12-24), XP055148499, Retrieved from the Internet <URL:http://www.renewableenergyworld.com/rea/news/article/2010/09/technologies-for-eliminating-oil-in-kaplan-turbines> [retrieved on 20141023]

## Description

### TECHNICAL FIELD AND PRIOR ART

The invention concerns turbines equipped with Kaplan runners.

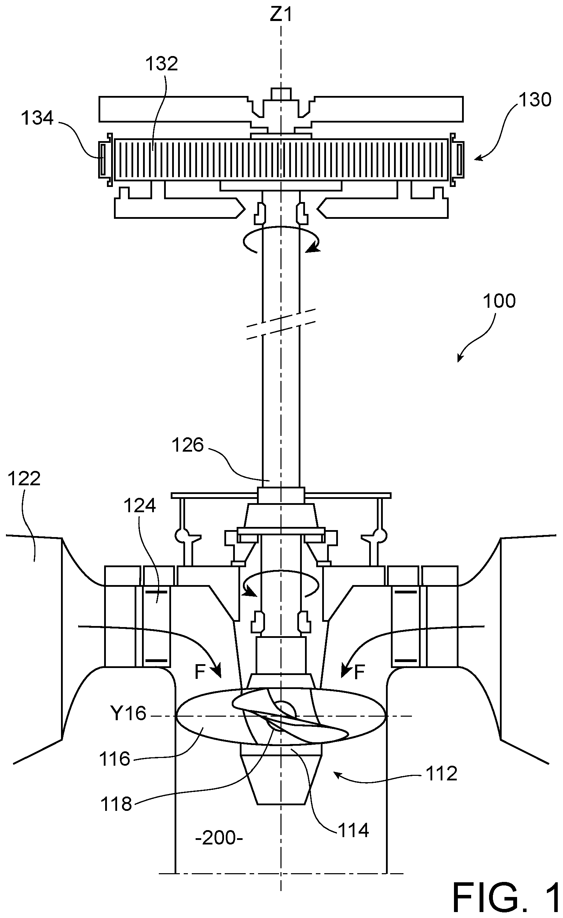

The general structure of a Kaplan turbine 100 is illustrated on figure 1; it comprises a runner 112 that is secured at a first end of a rotating shaft 126 centered on a vertical axis Z1 and configured to rotate around said axis in operating conditions. It further comprises a hub 114 equipped with a series of movable or adjustable runner blades 116. Coupling flanges 118 connect each a runner blade 116 to the hub 114, so that the blades are adjustable. The runner 112 is housed in the upper part of a draft tube 200 that is designed for evacuating water downstream and for increasing the efficiency of turbine 100. A volute 122 is arranged around the runner 112 and is fed with water. Indeed, the volute 122 is usually connected to a non-represented penstock that extends from a non-represented upstream reservoir. As a result, water outbursts in the volute 122 with a high potential energy. Water flows afterwards between the blades 116 of runner 112, thereby inducing the runner 112 to rotate. The flow rate of water circulating around the runner 112 is regulated by the blades themselves and also by means of guide vanes 124 that are disposed in a circular pattern within the distributor. The guide vanes 124 are each pivotable around an axis parallel to axis Z1 to reduce or increase the flow rate of water entering the turbine 100.

A generator rotor 132 is connected at a second end of the shaft 126, which is opposed to the first end thereof in the longitudinal direction of the shaft 126, that is along axis Z1. The rotor 132 is disposed coaxially within a stator 134 of a generator 130.

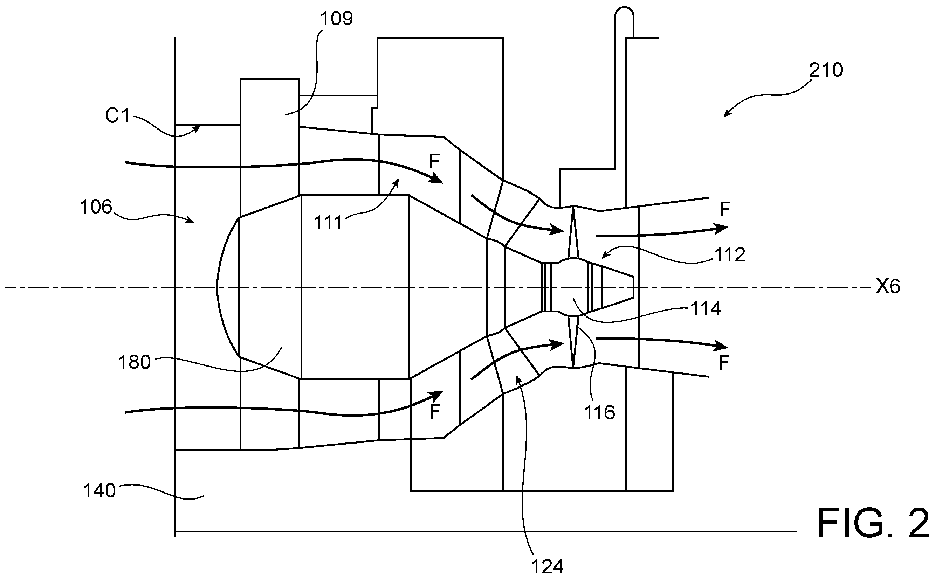

Another embodiment, to which the invention also applies, is shown on figure 2: the shaft is arranged horizontally and the turbine 106 (or bulb turbine) comprises components identical or similar to those of figure 1 and which bear the same reference numbers. The blades 116 are attached to the hub 114 and are part of the bulb unit 106. The installation of figure 2 further includes a concrete structure 140 that delimits a horizontal channel C1 of circulation of water. The bulb 106 is disposed within the channel C1 and is adapted to rotate around a horizontal rotation axis X6 under the action of a forced water flow F coming from a non-represented reservoir. The bulb 106 includes a bulb casing 180 that is supported within channel C1 by a bulb hanger 109 and stay vanes 111. The runner 112 is coupled to a non-represented generator which is disposed within the bulb casing 180 and which delivers an alternative voltage to a non-represented electricity power grid.

In this application, the expression "Kaplan turbine" will refer to a turbine provided with a Kaplan runner, whatever the direction of its shaft. Alternatively, it will be referred to a turbine with a Kaplan runner.

The moving parts of such turbines are usually lubricated with grease or oil .

For this reason, most Kaplan runner hubs are designed to be filled with oil, but we see more and more environmental pressures requesting oil free runners.

Oil free runners are known in the art, for example from CA 2889026: they are designed with self-lubricated bushing operating in a hub filled with water instead of oil. But this design is plagued with limitations and problems. The life expectancy of self-lubricated bushings and blade's mechanisms components of the runner hub in water are much shorter than bronze bushings in oil due to corrosion, even when stainless steel is used.

In water-filled solution, a corrosion inhibitor is sometime used to prevent/limit the corrosion inside the runner, but due to environmental constraints this kind of chemical products is less and less accepted and for most of self-lubricated bushings the wear and friction are still negatively impacted by water.

An air-filled hub can be implemented instead of a water-filled hub, but this type of runner is known to provide a humid environment which is also unfavorable for the life of the runner and prone to heavy detrimental rusting effects. This detrimental effect is even present if the air-filled hub is maintained at a positive pressure, due to condensation and to potential minor water leaks inside the hub.

An air-filled design without air exchange is made by several manufacturers: the oil inside the runner is replaced by air and the blade bronze bushings are replaced by self-lubricated material; the air is not changed in operation and accumulating water is usually drained during maintenance. But all water leakages coming from the blade seals and other localization create an environment which is highly corrosive. After a while the runner may be running with some mixture of humid air and liquid water inside it. Even if the water is drained automatically or during rare periodic maintenance, the corrosive environment is still present because the humid atmosphere remains. Document FR 1 017 514 A discloses a Kaplan turbine comprising means for supplying air to the turbine hub.

There is therefore a need for a new system and a new method to operate and/or to lubricate a Kaplan turbine.

### SUMMARY OF THE INVENTION

The invention first concerns a turbine comprising a shaft, a runner, or a Kaplan runner, which comprises a number of blades and a hub, located at the end of the shaft and supporting the blades, said turbine further comprising :
- means for generating dry air;
- means for supplying the turbine with a flow of said dry air;
- means for evacuating a flow of air out of said turbine after said flow of dry air has flowed at least through the hub or at least through part of the hub.

Dry air is air with a dew point low enough to ensure no condensation inside the hub and able to remove or absorb humidity from the hub.

Preferably, the dryer, or the means for generating dry air, should be able to generate dry air having a dew point lower than 0°C, for example at or around -5°C or preferably at or around -10°C, or at around -20°C or at around -40°C. The lower the dew point, the more moisture could be extracted from the runner hub. Preferably the dew point is at least 10°C lower than the water temperature.

The dryer (or the means for generating dry air) can be selected based on its dew point and air flow rate. A dew point at least 10°C lower than the water temperature provides a good capacity for efficient moisture removal, assuming a complete hub air exchange in a reduced time, for example in no more than 60 minutes.

Thus, according to the invention a hub of a turbine, preferably comprising a Kaplan turbine, can be swept with dry air, eliminating at least part of, and preferably all, the water and humidity present in the turbine.

According to the invention, the interior of the runner hub is maintained dry and without humidity or condensation, for example originating from any leak, by circulating dry air inside the runner hub . This dry air is capable to eliminate water entering the hub from water leaks and will prevent condensation which eliminates any potential corrosion issue and optimizes the expected life of the runner components.

A turbine according to the invention may comprise means, for example one or more sensor(s), to monitor or measure the humidity of said flow of air evacuated out of said turbine. Thus, an air outlet can allow the monitoring of the air condition inside the runner hub.

A turbine according to the invention may further comprise an outlet chamber or tank to collect at least part of said flow of air evacuated out of said turbine. The humidity of the air of said flow of air can be monitored by one or more sensor(s) in said chamber. Said outlet chamber can for example at least partly surround said shaft.

In a turbine according to the invention:
- said means for supplying the turbine with a flow of said dry air can comprise at least an inlet duct inside said shaft; said inlet duct may have a first section at least partly located in the shaft and a second section comprising a plurality of distributing ducts, for example at least two ducts connected to the first section and extending from said first section laterally or at an angle with respect to the direction of said shaft; said distributing ducts can distribute dry air at locations which are offset from the vertical axis of the runner;
- and/or said means for evacuating a flow of air out of said turbine after said flow of dry air has flowed at least through the hub may comprise a duct, or an outlet duct, rotating with, or located inside, said shaft;
- and/or said means for evacuating a flow of air out of said turbine after said flow of dry air has flowed at least through the hub may comprise an outlet to evacuate said air into a water flow.

In a turbine according to the invention, said means for supplying the turbine with a flow of said dry air can comprise means for varying the flow or the frequency of said flow of dry air; for example it comprises means for regulating or to control said flow and/or the frequency of said flow of dry air, for example on the basis of an ambient air humidity degree and/or of water temperature and/or rate of humidity of said flow of air evacuated out of said turbine.

The invention also concerns a shaft for a turbine, for example according to the present invention as described above and in this application, comprising :
- at least a first duct inside said shaft, for supplying the turbine with a flow of air;
- at least a second duct fixed to, and/or rotating with, or located inside, said shaft, for evacuating a flow of air out of said turbine after a flow of dry air has flowed at least through part of the turbine, for example through the hub.

The invention also concerns a method for operating a turbine as described above or in this application.

The invention also concerns a method for operating a turbine, for example a Kaplan runner and/or as described above and/or in this application, comprising:
- injecting dry air into said turbine;
- circulating said dry air through at least part of the turbine, for example the hub;
- and evacuating a flow of air out of said turbine after said flow of dry air has flowed at least through the hub or at least through part of the hub.

Dry air may be generated from atmospheric air.

The invention concerns in particular a method for operating a turbine comprising a shaft, a Kaplan runner having a number of blades and a hub, located at the end of the shaft and bearing the blades, said method comprising :
- generating a flow of dry air;
- supplying the turbine with said flow of said dry air;
- evacuating a flow of air out of said turbine after said flow of dry air has flowed at least through the hub or at least through part of the hub.

In a method according to the invention, the dry air should preferably have a dew point lower than 0°C, for example at or around -5°C or preferably at or around -10°C, or at or around -20°C or at or around -40°C. The lower the dew point, the more moisture can be extracted from the runner hub. Preferably the dew point is at least 10°C lower than the water temperature. This provides a good capacity for efficient moisture removal, assuming a complete hub air exchange in a reduced time, for example in no more than 60 minutes.

A humidity rate of said flow of air which is evacuated out of said turbine can be measured. Said flow and/or the frequency of said flow of dry air may be continuous or variable and/or adjusted depending on said humidity rate; the dry air flow may be for example regulated or controlled, for example on the basis of an ambient air humidity degree and/or of water temperature and/or rate of humidity of said flow of air evacuated out of said turbine.

In a method according to the invention:
- said flow of dry air can be supplied to said turbine through an inlet duct at least partly located in said shaft; for example dry air can be distributed at locations which are offset from the axis of the runner (thus can be achieved with an inlet duct having a first section at least partly located in the shaft and a second section comprising a plurality of distributing ducts, for example at least two ducts connected to the first section and extending from said first section laterally or at an angle with respect to the direction of said shaft);
- and/or said flow of air being evacuated out of said turbine through a duct, or an outlet duct, rotating with, or at least partly located in or inside, said shaft;
- and/or said flow of air being evacuated through an outlet into a water flow.

In a method according to the invention, the hub of the turbine can be filled with dry air.

A turbine, or a turbine comprising a Kaplan runner, according to the invention or implemented in a method according to the invention can be of the horizontal type or of the vertical type or can be operated at any angle between horizontal and vertical.

### BRIEF DESCRIPTION OF THE DRAWINGS

- figure 1 shows an example of a known vertical Kaplan turbine;
- figure 2 shows an example of a known horizontal Kaplan turbine, also usually referred as bulb turbine;
- figure 3 shows a turbine according to the invention;
- figure 4 shows a more detailed view of a horizontal turbine according to the invention;
- figures 5A and 5B show variants of a vertical turbine according to the invention;
- figure 6 shows another embodiment of a vertical or horizontal runner with an air exhaust in water;
- figure 7 shows a more detailed view of a shaft of a turbine according to the invention;
- figure 8 shows a dry air generating and supply system for a turbine according to the invention;
- figure 9 shows an example of control system to control a turbine or a process according to the invention.

### DETAILLED DESCRIPTION OF SPECIFIC EMBODIMENTS

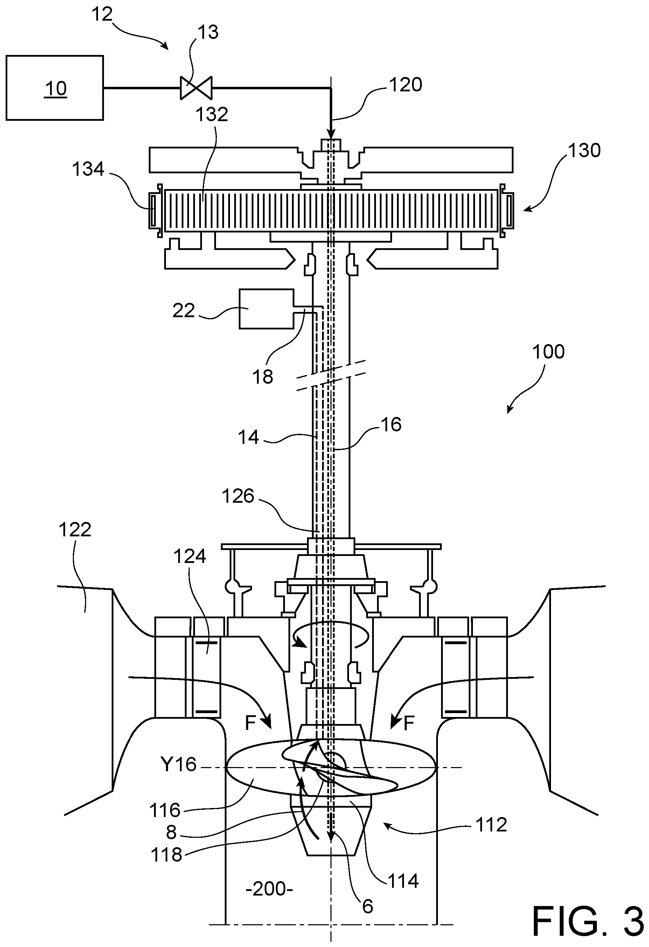

An example of a Kaplan turbine, or a turbine comprising a Kaplan runner, comprising a dry air supply system according to the invention is illustrated on figure 3, on which the same reference numbers designate the same elements as discussed above in connection with figures 1 and 2.

On this figure a dry air generating system 10 is connected to a circuit 12 in order to inject a flow 120 of dry air into the turbine, for example into a duct 16 formed in the rotating shaft 126 and extending down to the hub 114, in particular in order to keep the interior of the runner hub dry.

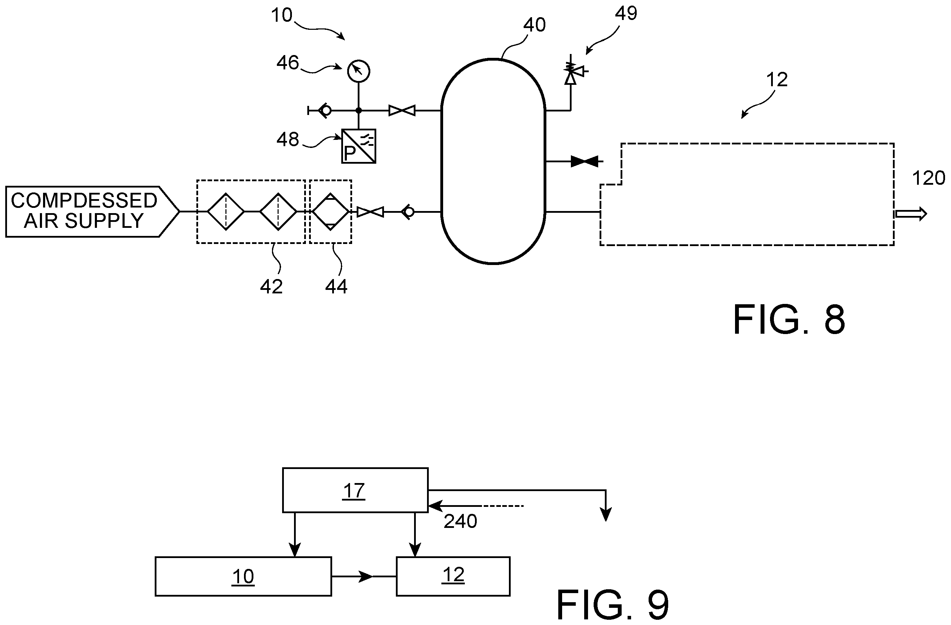

Said system 10 generates dry air from atmospheric or outside air . It may comprise a tank or accumulator 40 (see figure 8) for buffering said dry air. In addition to a dryer 44, it can further comprise a filter 42 and/or a compressor . This dry air may be compressed, for example at a pressure sufficient to provide the said air flow. For a given pressure, the corresponding dry air flow can be calculated or obtained.

For example, for a Kaplan runner operating in water, for example water of a cold Nordic river, which has a temperature close to zero degree Celsius in winter, the upper limit for the dry air dew point should be zero degree Celsius. This would allow to avoid condensation inside the runner hub even when water is almost down to 0°C. Furthermore, to remove moisture already present into the hub, the dry air should have a lower dew point than 0°C: a dew point around -5°C or preferably -10°C, or - 20°C or -40°C could be selected to allow some capacity to remove some moisture already present into the runner hub. The lower the dew point, the more moisture could be extracted from the runner hub.

The dryer (or the means for generating dry air) can be selected based on its dew point and air flow rate. The inventors have observed that a dew point at least 10°C lower than the water temperature provides a good capacity for efficient moisture removal, assuming a complete hub air exchange in no more than 60 minutes. An example of dryer which can be implemented is a desiccant air dryer, for example a D2 modular desiccant dryer of Nano Purification Solutions, Inc, see for example www.n-psi.com, ref.17-100-0120, Issue 007, Series 2. It can be a compressed air dryer using the pressure swing adsorption principle of drying compressed air, utilizing two identical columns each containing a hygroscopic desiccant bed. Other dryers can be used.

The humidity level or rate of this dry air can be measured to make sure condensation will not occur and/or to be able to drag some humidity from the runner hub, preferably even under the most adverse temperature conditions which is the coldest possible hub temperature when the runner is in operation, at rest or even during maintenance when runner can be exposed to ambient air temperature. In other words, this air has a dew point low enough to ensure no condensation is formed inside the hub and able to remove or absorb humidity from the hub.

The circuit 12 may comprise one or more regulating valve(s) 13 in order to regulate or to stop the flow 120 of dry air circulating in direction of the duct 16. Said one or more valve(s) can be controlled by a control system of the unit, for example a computer or a processor (not represented on the figure), for example based on an information or a signal from a humidity sensor as explained below. An example of such a control system is illustrated on figure 9.

In particular, the flow 120 of dry air can be supplied to the Kaplan runner through the shaft 126, and more particularly through the duct 16 extending along said shaft. As illustrated on figure 3, the air 8 then circulates in the hub 114 where it is mixed with air already present therein and then evacuated through a return or evacuation duct 14 which may also be formed in the shaft 126 and flows outside the shaft through an air outlet 18. Alternatively, said return or evacuation duct 14 could be located outside said shaft; preferably it is against the shaft or fixed to the shaft, thereby rotating with it. For example an air outlet tank 22 is connected to said air outlet 18 and can comprise means, for example a sensor, to monitor the air condition, in particular the humidity, inside the runner and particularly inside the hub 114. The flow 120 of dry air can be regulated based on an information from said means or sensor about the humidity rate inside the hub.

A turbine of the Kaplan type is composed of different parts which are assembled together. Water can leak from the outside of the runner hub 114 into the runner hub in particular at the interfaces between the blades and their seals or where sealing flanges are present, at the runner cone for example. The flow of dry air which is circulated as explained above therefore becomes laden with humidity as it flows through the hub 114. The air at outlet 18 can therefore be moisty air. Thus, the measurement of the humidity level or rate in the air at air outlet 18 is an indication of possible leaks in the turbine. This measurement of the humidity level or rate can be compared with a reference value or with the humidity level or rate of the flow 120 of dry air injected into the inlet duct 16. In other words, the air that flows through the runner can be tracked and/or analysed to check the humidity inside the runner and to detect the presence of any leakage. For example, as illustrated on figure 3, a chamber or tank 22 can be located at the outlet 18 and collect air which has flowed through the runner as explained above, such chamber or tank being provided with humidity sensor and/or a float (not represented on figure 3). It is also possible to exhaust the moisty air directly inside the river without circulating back to the chamber or tank 22. In this case for example a bluetooth sensor can be located in the runner cone. The above explanation, given in connection with a Kaplan turbine with a vertical shaft, also apply to a Kaplan turbine with a horizontal shaft or for a Kaplan turbine at any angle.

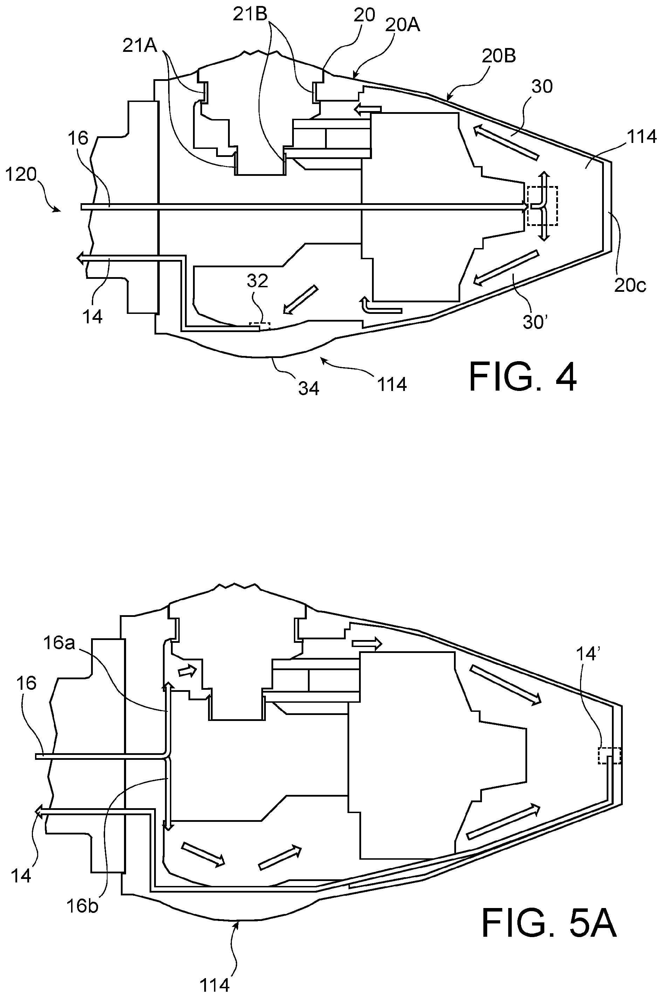

Figure 4 is a more detailed example of a horizontal Kaplan turbine implementing the invention and showing details of the air flow in the hub 114. A flow of dry air 120 is injected into the runner through horizontal duct 16, then into the hub 114 and is swept through areas 30, 30' of the hub possibly containing water or humidity resulting from water leaking from outside the hub into the runner. References 20 (blade seals), 20A (cone flange), 20B (hub filling port), 20C (at cone closing plate) are examples of various locations where water can leak into the runner. Similar locations are found in a vertical Kaplan turbine. As it travels through the hub, the dry air can thus be progressively laden with humidity or moisture. It may flow through parts of the runner located at, or closer to, the zone 32 of largest diameter. References 21A and 21B designate bushings.

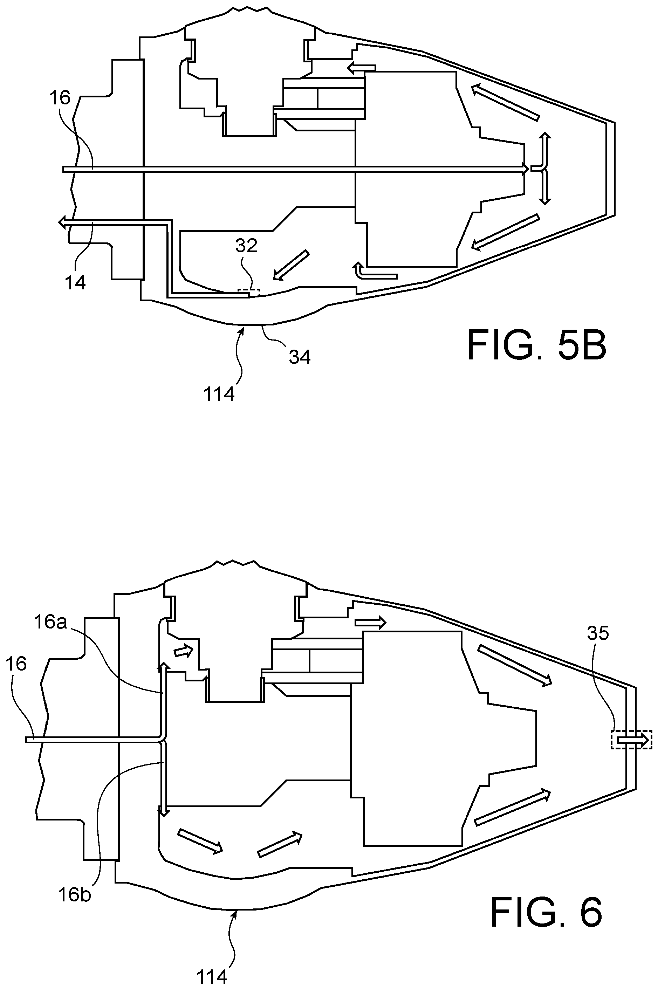

Figure 5A and 5B are other embodiments of a vertical Kaplan runner implementing the invention and showing details of the air flow through or into the hub 114. The same references as in figure 4 designate the same elements and reference is made for these elements to the above description. Here the dry air may flow through parts of the runner. The duct 14 is preferably positioned so that it may capture air at locations where water may accumulate during operation (Figure 5B) and/or when the machine is stopped (Figure 5A).

The inlet 14' to duct 14 (the drain) may be located at the bottom of the hub, as shown on figure 5A; this will depend on the operation of the machine and where the water should actually accumulate.

As shown on figure 5B, the inlet to duct 14 (the drain) may be located at the largest diameter of the runner, because when the machine rotates, water is going to flow to this area due to centrifugal forces.

In any of the embodiments given in this application, the inlet duct 16 may have a first section at least partly located in the shaft and a second section comprising a plurality of distributing ducts 16a, 16b (see for example on figure 5A), for example at least two ducts 16a, ,16b connected to the first section and extending from said first section laterally or at an angle with respect to the direction of said shaft. Said distributing ducts 16a, 16b can distribute dry air at locations which are offset from the vertical axis of the runner.

Figure 6 is a more detailed example of a vertical and/or horizontal Kaplan implementing the invention and showing details of the air flow through or into the hub 114 and the moisty air exhaust inside the water passage. The same references as in the preceding figures designate the same air inlet elements and reference is made for these elements to the above description. Here the dry air may flow through various parts of the runner. A moisty air exhaust 35 can be positioned to exhaust the moisty air directly to the water passage.

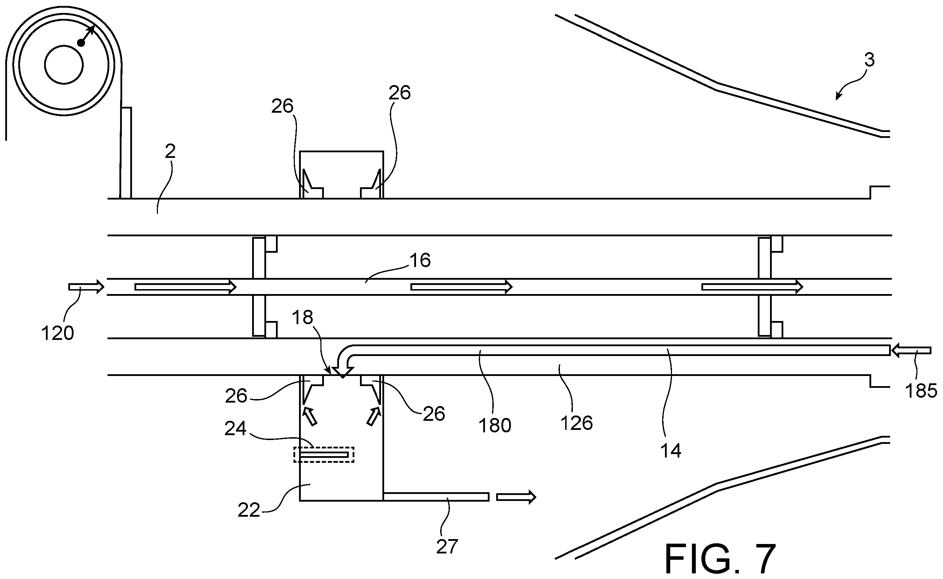

Figure 7 shows a detail of the shaft 126 of an embodiment of the invention comprising both the inner duct 16 to introduce a flow 120 of dry air and the lateral duct 14 through which the moisture laden air 185 is evacuated. Air 185 can then be evacuated through the rotating outlet 18 and then possibly to a chamber or tank 22 which is fixed and located close to, or around, the shaft 126 with labyrinths 26 which can be fixed on the shaft in order to maintain a tight gap between the rotating parts (the shaft) and the static part (the tank 22, which is preferably fixed on static parts, and is for example centred around the shaft, without contact between the tank and the shaft). Thus the shaft, comprising the inlet and the outlet ducts 16, 14, is rotating while the exit tank 22 is preferably fixed with respect to the shaft, while being located close to or around it. The air can then be evacuated from the tank 22 through an outlet duct 27 to the atmosphere. The reference 24 designates at least one humidity sensor and/or a water level indicator (indicating a water level in said tank 22); it can provide an information about the humidity and/or water level in the tank 22, thus giving a measurement of, or an information about, the humidity level in the hub 114, and therefore an information about possible leaks of water from outside the turbine into the hub. The information about the degree or rate of humidity can be provided to a controller which can be programmed to regulate the volume and /or the frequency of the inlet air flow 120 and/or some maintenance plan based on said information. Alternatively, even without controller, this information can be used to plan maintenance of the system, for example the replacement of one or more seal(s).

Figure 8 shows an example of a dry air generating system 10 together with the air supply system 12 which can be implemented in the frame of the present invention. In this embodiment one or more filter(s) 42, a dryer(s) 44 and a compressor feed a tank 40 with dry air. The pressure inside the tank 40 can be measured with a pressure gauge 46 and controlled by pressure sensor 48. The system may comprise a pressure limit or relief valve 49 to protect the tank.

Dry air 120 can be supplied from the tank 40 to a Kaplan turbine through supply system 12 which for example comprises one or more valve(s).

An example of a control system for a system according to the invention is illustrated on figure 9. It comprises a processor or a computer 17 configured or programed so as to implement a process according to the invention, in particular in order:
- to control the system 10 for generating dry air;
- and/or to control the system 12;
- and/or to receive signal(s) 240 from sensor(s), for example sensor(s) 24, and possibly regulate the volume and /or the frequency of the inlet air flow and/or some maintenance plan based on said signal(s);
- and/or to control the turbine.

Alternatively, or in addition, said processor or computer 17 can be configured or programed so as to implement a process according to the invention, in particular in order to control:
- the generation of a flow of dry air;
- the supply of the turbine with said flow of said dry air;
- the evacuation of a flow of air out of said turbine after said flow of dry air has flowed at least through the hub.

For example said processor or a computer 17 implements a computer program comprising instructions for implementing a method according to the invention.

The device of figures 3-8 can be controlled by said processor or a computer 17.

The invention allows all elements of the runner, in particular the bushing(s) and/or bearing(s) and/or the blade mechanism to operate in dry air. The invention avoids any environmental risk associated with any liquid in the runner : there can be no leakage of any kind into the water of the river, since no oil or water inhibitor or antibacterial additive is used.

The invention also:
- reduces friction and wear of most or all the internal elements and components of the hub, like self-lubricated bushing(s), which increases their life; all these components behave much better in air than in water, the invention therefore extends the life of these components and reduces the need to repair them or to repair the hub;
- eliminates risks associated with rust in the runner hub;
- extends blades mechanical life to level comparable with what is usually seen for standard Kaplan runner with oil; indeed, as already explained above, the use of dry air reduces or eliminates the presence of humidity and therefore the risk of corrosion;
- eliminates the galvanic corrosion risk related to water-filled Kaplan design and eliminates the impact of the water on the fatigue of the runner.

The dry air generated by the dry air generator can be used to fill the runner. As air is lighter than water, an air-filled runner improves the behaviour of the turbine regarding shaft line vibrations and critical speed and the turbine shaft fatigue life. The use of dry air ensures that the critical speed remains constant all the time: without dry air, some water can accumulate into the hub, which may results in a decrease in the critical speed after some time.

## Claims

1. A turbine (1) comprising :
- a shaft (126);
- a Kaplan runner which comprises a number of blades (116) and a hub (114), located at the end of the shaft and bearing the blades,
- means (10) for generating dry air;
- means (12, 16) for supplying the turbine with a flow (120) of said dry air;
- means (14, 18, 22, 27, 35) for evacuating a flow (185) of air out of said turbine after said flow of dry air has flowed at least through the hub (114).

2. A turbine according to claim 1, further comprising means (24) to monitor or measure the humidity of said flow (185) of air evacuated out of said turbine.

3. A turbine according to any of claims 1 to 2, further comprising an outlet chamber or tank (22) to collect at least part of said flow (185) of air evacuated out of said turbine.

4. A turbine according to claim 3, said outlet chamber at least partly surrounding said shaft (126).

5. A turbine according to any of claims 1 to 4, said means (12, 16) for supplying the turbine with a flow (120) of said dry air comprising an inlet duct (16) inside said shaft (126).

6. A turbine according to any of claims 1 to 5, said means (14, 18, 22, 27, 35) for evacuating a flow (185) of air out of said turbine after said flow of dry air has flowed at least through the hub (114) comprising an outlet duct (14) fixed to, or rotating with, or located inside, said shaft (126).

7. A turbine according to any of claims 1 to 5, said means ( 35) for evacuating a flow (185) of air out of said turbine after said flow of dry air has flowed at least through the hub (114) comprising an outlet (35) to evacuate said air into a water flow.

8. A turbine according to any of claims 1 to 7, said means (12, 16) for supplying the turbine with a flow (120) of said dry air comprising means (17) for varying the flow or the frequency of said flow (120) of dry air.

9. A turbine according to claim 8, further comprising means (24, 12) for regulating said means for varying the flow or the frequency of said flow (120) of dry air, for example on the basis of a humidity degree or rate of said flow (185) of air evacuated out of said turbine.

10. A turbine according to any of claims 1 to 9, said means for supplying the shaft with dry air comprising a tank (40) to store dry air.

11. A turbine according to any of claims 1 to 10, said means for supplying the shaft with dry air comprising means (44) for drying air.

12. A method for operating a turbine comprising a shaft (126), a Kaplan runner having a number of blades (116) and a hub (114), located at the end of the shaft and bearing the blades, said method comprising :
- generating a flow of dry air (120);
- supplying the turbine with said flow (120) of said dry air;
- evacuating a flow (185) of air out of said turbine after said flow of dry air has flowed at least through the hub (114).

13. A method according to claim 12, further comprising measuring a humidity rate of said flow (185) of air which is evacuated out of said turbine.

14. A method according to claim 13, further comprising varying said flow (120) of dry air depending on said humidity rate.

15. A method according to any of claims 12 to 14, said flow (120) of dry air being supplied to said turbine through an inlet duct (16) at least partly located in said shaft and/or said flow (185) of air being evacuated out of said turbine through an outlet duct (14) fixed to, or rotating with, or at least partly located in said shaft and/or said flow of air being evacuated through an outlet (35) into a water flow .

## Patentansprüche

1. Turbine (1), umfassend:
- eine Welle (126);
- einen Kaplanläufer, der eine Anzahl von Schaufeln (116) und eine Nabe (114) umfasst, die sich am Ende der Welle befinden und die Schaufeln tragen,
- Mittel (10) zum Erzeugen von trockener Luft;
- Mittel (12, 16) zum Versorgen der Turbine mit einem Trocken (120) trockener Luft;
- Mittel (14, 18, 22, 27, 35) zum Absaugen eines Luftstroms (185) aus der Turbine, nachdem der Trockenluftstrom mindestens durch die Nabe (114) geflossen ist.

2. Turbine nach Anspruch 1, ferner umfassend Mittel (24) zum Überwachen oder Messen der Luftfeuchtigkeit des aus der Turbine abgesaugten Luftstroms (185).

3. Turbine nach einem der Ansprüche 1 bis 2, ferner umfassend eine Auslasskammer oder einen Behälter (22) zum Auffangen mindestens eines Teils des aus der Turbine abgesaugten Luftstroms (185).

4. Turbine nach Anspruch 3, wobei die Auslasskammer die Welle (126) mindestens teilweise umgibt.

5. Turbine nach einem der Ansprüche 1 bis 4, die Mittel (12, 16) zum Versorgen der Turbine mit einem Strom (120) trockener Luft, umfassend einen Einlasskanal (16) innerhalb der Welle (126).

6. Turbine nach einem der Ansprüche 1 bis 5, wobei die Mittel (14, 18, 22, 27, 35) zum Absaugen eines Luftstroms (185) aus der Turbine, nachdem der Trockenluftstrom mindestens durch die Nabe (114) geströmt ist, umfassend einen Auslasskanal (14), der an der Welle (126) befestigt ist oder sich mit ihr dreht oder sich darin befindet.

7. Turbine nach einem der Ansprüche 1 bis 5, das Mittel (35) zum Absaugen eines Luftstroms (185) aus der Turbine, nachdem der Trockenluftstrom mindestens durch die Nabe (114) geströmt ist, umfassend einen Auslass (35) zum Absaugen der Luft in einen Wasserstrom.

8. Turbine nach einem der Ansprüche 1 bis 7, die Mittel (12, 16) zum Versorgen der Turbine mit einem Strom (120) trockener Luft, umfassend Mittel (17) zum Variieren des Stromes oder der Frequenz des Stromes (120) trockener Luft.

9. Turbine nach Anspruch 8, ferner umfassend Mittel (24, 12) zum Regeln der Mittel zum Variieren des Stroms oder der Frequenz des Stroms (120) trockener Luft, beispielsweise auf der Grundlage eines Feuchtigkeitsgrads oder -rate des an der Turbine abgesaugten Stroms (185) von Luft.

10. Turbine nach einem der Ansprüche 1 bis 9, wobei die Mittel zum Versorgen der Welle mit trockener Luft einen Behälter (40) zum Speichern von trockener Luft umfasst.

11. Turbine nach einem der Ansprüche 1 bis 10, wobei die Mittel zum Versorgen der Welle mit trockener Luft Mittel (44) zum Trocknen der Luft umfasst.

12. Verfahren zum Betreiben einer Turbine, umfassend eine Welle (126), einen Kaplanläufer mit einer Anzahl von Schaufeln (116) und einer Nabe (114), die sich am Ende der Welle befinden und die Schaufeln tragen, wobei das Verfahren Folgendes umfasst:
- Erzeugen eines Trockenluftstroms (120);
- Versorgen der Turbine mit dem Strom (120) der trockenen Luft;
- Absaugen eines Stroms (185) trockener Luft aus der Turbine, nachdem der Trockenluftstrom mindestens durch die Nabe (114) geströmt ist.

13. Verfahren nach Anspruch 12, ferner umfassend das Messen einer Feuchtigkeitsrate des Stromes (185) trockener Luft, der aus der Turbine abgesaugt wird.

14. Verfahren nach Anspruch 13, ferner umfassend das Variieren des Stromes (120) trockener Luft in Abhängigkeit von der Feuchtigkeitsrate.

15. Verfahren nach einem der Ansprüche 12 bis 14, wobei der Strom (120) trockener Luft der Turbine durch einen mindestens teilweise in der Welle befindlichen Einlasskanal (16) zugeführt wird und/oder der Luftstrom (185) durch einen an der Welle befestigten oder sich mit ihr drehenden oder mindestens teilweise in der Welle befindlichen Auslasskanal (14) aus der Turbine abgesaugt wird und/oder der Luftstrom durch einen Auslass (35) in einen Wasserstrom abgesaugt wird.

## Revendications

1. Turbine (1) comprenant :
- un arbre (126) ;
- une roue Kaplan qui comprend un certain nombre d'aubes (116) et un moyeu (114), situé à l'extrémité de l'arbre et portant les aubes,
- des moyens (10) de génération d'air sec ;
- des moyens (12, 16) d'alimentation de la turbine en un flux (120) dudit air sec ;
- des moyens (14, 18, 22, 27, 35) d'évacuation d'un flux (185) d'air hors de ladite turbine après que ledit flux d'air sec s'est écoulé au moins à travers le moyeu (114).

2. Turbine selon la revendication 1, comprenant en outre des moyens (24) de surveillance ou de mesure de l'humidité dudit flux (185) d'air évacué hors de ladite turbine.

3. Turbine selon l'une quelconque des revendications 1 à 2, comprenant en outre une chambre ou un réservoir de sortie (22) pour collecter au moins une partie dudit flux (185) d'air évacué hors de ladite turbine.

4. Turbine selon la revendication 3, ladite chambre de sortie entourant au moins partiellement ledit arbre (126).

5. Turbine selon l'une quelconque des revendications 1 à 4, lesdits moyens (12, 16) d'alimentation de la turbine en un flux (120) dudit air sec comprenant un conduit d'entrée (16) à l'intérieur dudit arbre (126).

6. Turbine selon l'une quelconque des revendications 1 à 5, lesdits moyens (14, 18, 22, 27, 35) d'évacuation d'un flux (185) d'air hors de ladite turbine après que ledit flux d'air sec s'est écoulé au moins à travers le moyeu (114) comprenant un conduit de sortie (14) fixé audit arbre (126), tournant avec celui-ci ou situé à l'intérieur de celui-ci.

7. Turbine selon l'une quelconque des revendications 1 à 5, lesdits moyens (35) d'évacuation d'un flux (185) d'air hors de ladite turbine après que ledit flux d'air sec s'est écoulé au moins à travers le moyeu (114) comprenant une sortie (35) pour évacuer ledit air dans un flux d'eau.

8. Turbine selon l'une quelconque des revendications 1 à 7, lesdits moyens (12, 16) d'alimentation de la turbine en un flux (120) dudit air sec comprenant des moyens (17) de variation du flux ou de la fréquence dudit flux (120) d'air sec.

9. Turbine selon la revendication 8, comprenant en outre des moyens (24, 12) de régulation desdits moyens de variation du flux ou de la fréquence dudit flux (120) d'air sec, par exemple sur la base d'un degré ou d'un taux d'humidité dudit flux (185) d'air évacué hors de ladite turbine.

10. Turbine selon l'une quelconque des revendications 1 à 9, lesdits moyens d'alimentation de l'arbre en air sec comprenant un réservoir (40) pour stocker de l'air sec.

11. Turbine selon l'une quelconque des revendications 1 à 10, lesdits moyens d'alimentation de l'arbre en air sec comprenant des moyens (44) de séchage d'air.

12. Procédé de fonctionnement d'une turbine comprenant un arbre (126), une roue Kaplan ayant un certain nombre d'aubes (116) et un moyeu (114), situé à l'extrémité de l'arbre et portant les aubes, ledit procédé comprenant :
- la génération d'un flux d'air sec (120) ;
- l'alimentation de la turbine en ledit flux (120) dudit air sec ;
- l'évacuation d'un flux (185) d'air hors de ladite turbine après que ledit flux d'air sec s'est écoulé au moins à travers le moyeu (114).

13. Procédé selon la revendication 12, comprenant en outre la mesure d'un taux d'humidité dudit flux (185) d'air qui est évacué hors de ladite turbine.

14. Procédé selon la revendication 13, comprenant en outre la variation dudit flux (120) d'air sec en fonction dudit taux d'humidité.

15. Procédé selon l'une quelconque des revendications 12 à 14, ledit flux (120) d'air sec étant fourni à ladite turbine à travers un conduit d'entrée (16) au moins partiellement situé dans ledit arbre et/ou ledit flux (185) d'air étant évacué hors de ladite turbine à travers un conduit de sortie (14) fixé audit arbre, tournant avec celui-ci ou au moins partiellement situé dans celui-ci et/ou ledit flux d'air étant évacué à travers une sortie (35) dans un flux d'eau.
